## Europäisches Patentamt

## European Patent Office

## Office européen des brevets

(11) Publication number: **0 096 904**
**B1**

## EUROPEAN PATENT SPECIFICATION

(45) Date of publication of patent specification: **16.09.87**

(51) Int. Cl.⁴: **B 60 K 17/346, F 16 H 1/42**

(21) Application number: **83200477.4**

(22) Date of filing: **02.04.83**

(54) **Differential assembly for distribution of torque between the front and rear axles of an automotive vehicle.**

(30) Priority: **11.06.82 IT 2182182**

(43) Date of publication of application:
**28.12.83 Bulletin 83/52**

(45) Publication of the grant of the patent:
**16.09.87 Bulletin 87/38**

(84) Designated Contracting States:
**DE FR GB IT SE**

(56) References cited:
**EP-A-0 030 120**
**DE-A-3 221 606**
**DE-C- 811 650**

(73) Proprietor: **S.I.R.P. STUDI INDUSTRIALI
REALIZZAZIONE PROTOTIPI S.p.A.
Via A.Grandi 11
I-10024 Moncalieri (Torino) (IT)**

(72) Inventor: **Sala, Silvio
Viale Certosa n.94
I-20156 Milano (IT)**

(74) Representative: **Lotti, Giorgio
c/o Ing. Barzanò & Zanardo Milano S.p.A. Via
Cernaia 20
I-10122 Torino (IT)**

Courier Press, Leamington Spa, England.

# Description

One of the fundamental problems solved by using a "third differential", that is to say a differential which distributes torque between the two axles of a vehicle, is the requirement that the said component have a very small bulk.

It in fact frequently occurs that a model of vehicle designed with a bodywork intended for propulsion with the driven wheels on one axle only may employ a more powerful engine which can with advantage use a four-wheel-drive system.

A like problem arises when a four-wheel-drive system is required for use of the vehicle on terrain where adhesion is poor.

In addition to the problem of obtaining a small overall bulk, other closely related problems exist.

For the structure of the differential assembly must permit a satisfactory adaptability of the output of the power take off shaft for the entrainment of the supplementary driven wheels so that the chassis does not have to have alterations made to it, not even to the drive shaft tunnel.

Moreover, an apt choice of the position of this power take off output allows improved transmission, i.e. allows the transmission to be as linear as possible so as to avoid the inconstant velocity phenomena of the universal joints caused by not negligible angles between the rotation axes of the various members linked to the transmission.

Finally, an appreciable advantage of this differential is that the distribution of torque between the outputs can be freely selected in advance during the planning stage, so that both the rear axle and the front axle can be appropriately loaded.

DE—C—811 650 discloses a differential assembly for vehicles, comprising a gear wheel in driving engagement with a driving wheel and composed of a ring gear and a housing, cylindrical spur gears rotatably mounted on said housing, said spur gears meshing with each other and each meshing with one of two coaxial spur wheels driving separate axles, one of said spur wheels being connected with a first output and the second spur wheel being connected with a second output.

The device however does not allow a good alignment between the axis of the transmission shafts of the two axles and the axis of the power take-off.

Furthermore it has not a good flexibility in the construction limited by the overall dimensions; therefore, the possibility of choosing the couple distribution between the front and the rear wheels is reduced.

EP—A—30120 discloses a transmission apparatus comprising a transmission transversely disposed and connected to the crankshaft of said engine through a clutch, a final reduction gear engaged with an output gear of said transmission, a differential secured to a side of said final reduction gear and disposed adjacent said differential, and a propeller shaft connected to said transfer device for driving another axle for four-wheel drive.

This apparatus, however, is useful only for a motor vehicle having an internal combustion engine transversely disposed in said vehicle.

The object of the invention is to obviate to the problems of the above prior art and to propose an apparatus which fulfils all of said purposes previously indicated.

In view of the above the invention embodies a differential assembly for the distribution of torque between the front and rear axles of an automotive vehicle, each of the axles being provided with respective differentials, the assembly comprising a gear wheel in driving engagement with a gearbox output wheel, cylindrical spur gears rotatably mounted on said gear wheel, said spur gears meshing with each other and each meshing with one of two coaxial spur wheels, one of said spur wheels being connected with the front of rear differential and the second spur wheel being connected with the outer differential; said spur wheels being positioned around the differential of the front axle, the spur wheel connected with the second differential at least partially enclosing the spur wheel connected with the first differential.

The advantages and characteristics of the invention will become more fully apparent from the following description of one practical embodiment thereof, illustrated in the attached drawings, in which:

— Figure 1 is a schematic sectional view of the essential components of a differential unit according to the invention;

— Figure 2 is a partial sectional view in the direction of the line II—II of Figure 1;

— Figures 3 and 4 are overall views, respectively plan and elevational views, of the power pack and of a part of the transmission system of a vehicle to which the devices according to the invention is applied.

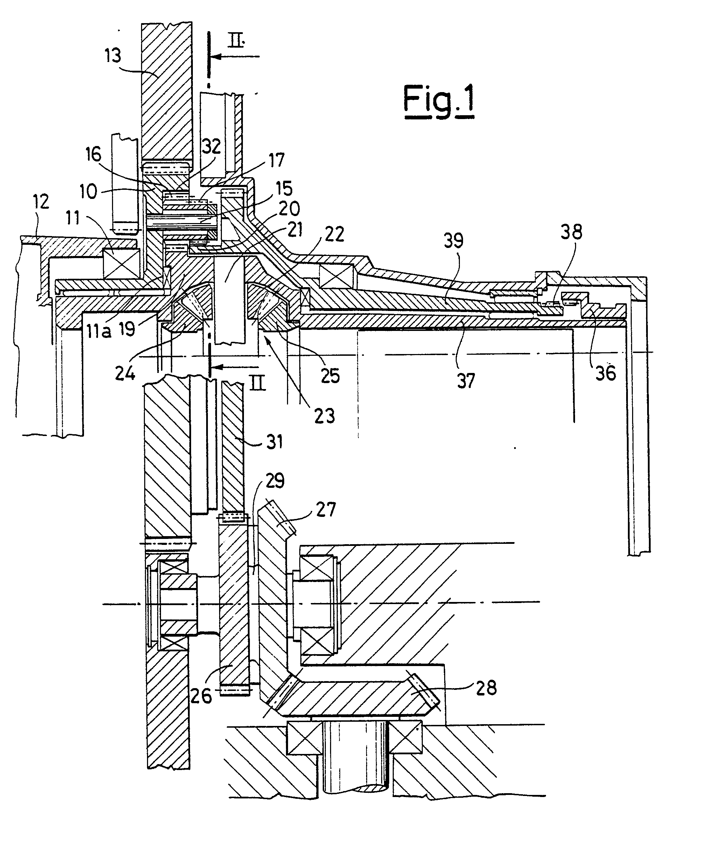

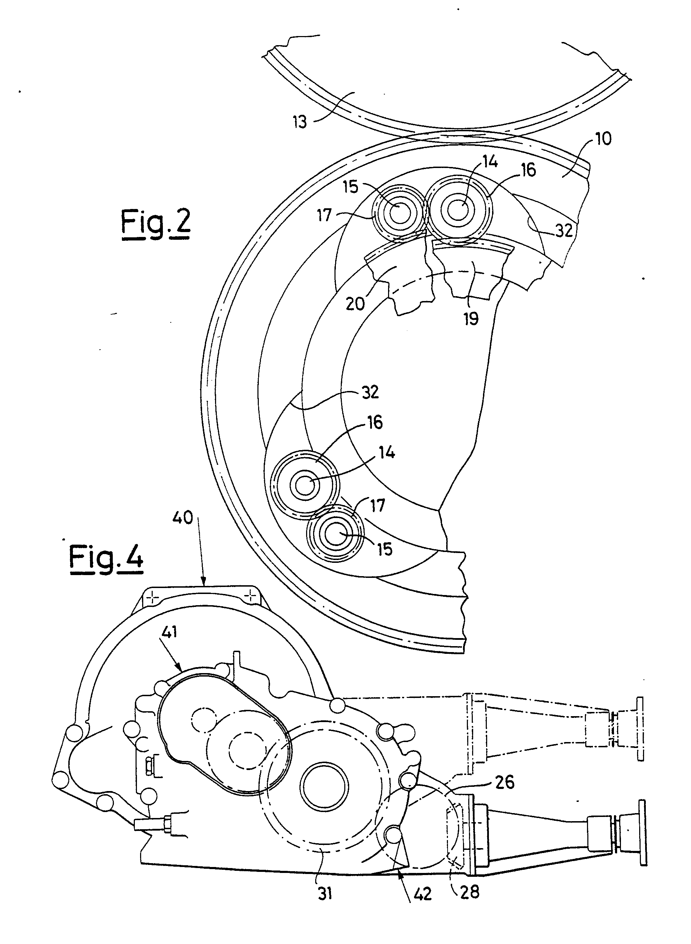

As shown in the drawings, the differential assembly (Figures 1 and 2) comprises a gear wheel 10 which is supported by bearings 11—11a in the gearbox 12 and which is entrained by meshing with the gearbox output wheel 13, of traditional type.

The gear wheel 10, mounted idly and coaxially with the front axle, carries the spindles 14 and 15 of spur gears 16 and 17 which engage with each other respectively with the spur wheel 19 and 20. The spur wheel 19 carries the spindle 21 on which are idly mounted the bevel gears 22 of the traditional differential, indicated generically by 23 and comprising the two bevel wheels 24 and 25 connected to each of the half-shafts.

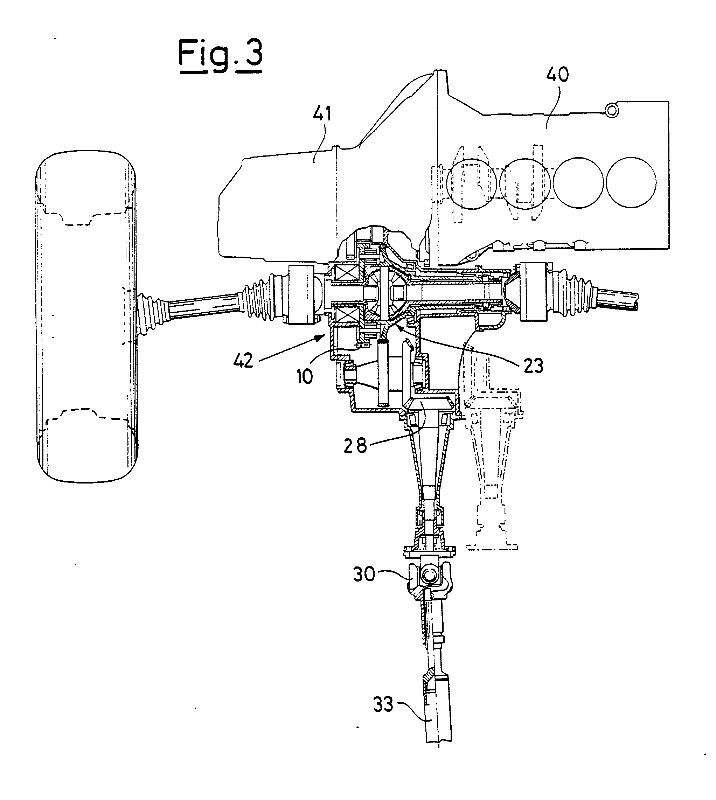

The other spur wheel 20 carries another gear wheel 31 which meshes with a gear wheel 26 to which there is rigidly connected on a shaft 29 the bevel gear 27 which is in mesh with the driven bevel gear 28 from which is drawn the drive which with a normal universal joint 30 and driven shaft 33 (Figure 3) is transmitted to the differential — not shown — of the rear axle.

The third differential according to the invention thus consists of the gear wheel 10, the function of which is to carry the spur gears 16 and 17 in one of its seatings 32, better illustrated in Figure 2, and of the two externally toothed spur wheels 19 and 20, which engages the wheel 26, only subsequently to be in transmitted through the final drive 27—28.

A structural arrangement of this kind makes it possible to obviate the greater longitudinal bulk necessarily brought about by the gear wheel 31 of conical configuration, in order to draw directly therefrom the drive to head pinion of the driven shaft.

With this original layout of the components there is obtained the advantage of being able variously to arrange the differential output with minimal constructional alternations.

For, by varying the length of the shaft 29, the output from the driven bevel gear 28 can be shifted in the horizontal plane so as to place the propeller shaft to the rear wheels in the optimal position.

Such a possibility is better illustrated in Figure 3, which gives a schematic overall plan view of the mechanical components of a vehicle with front tranverse engine, with the gearbox 41, and the differential assembly 42 which incorporates the third differential and the front axle differential, as illustrated in greater detail in the previous figures. There are shown different positions that can be taken up by the bevel gear 28 and thus by the shaft 33 coming out of it, as a result of providing different lengths for the shaft 29.

The vertical distance of the output of the power take off can be readily varied simply by orbiting the shaft of the bevel gear 28 about the axis of the spur wheel 20. The different vertical position shown in the lateral view of the assembly as per Figure 4 can in this manner be achieved.

The advantage deriving from the existence of the pair of spur wheels 19—20 in this specific application is the possibility of lining-up the distribution of torque in a different manner in the third differential.

In effect, by appropriately sizing the pair 19—20, the distribution of torque in the third differential can be varied by reason of the different diameters assumed by the two spur wheels 19 and 20.

The desired distribution of torque between the front and rear axles of the vehicles can thus be obtained.

The differential assembly as illustrated can of course be completed with all the further traditional components required for the functioning that is desired. Thus, the third differential can be locked by a coupling between the two spur wheels; an example of such coupling is provided by sliding sleeve 36 on the tubular extension 37 of the spur wheel 19, which sleeve can engage with the toothed portion 38 which terminates the tubular extension 39 of the spur wheel 20.

**Claims**

1. A differential assembly for the distribution of torque between the front and rear axles of an automotive vehicle, each of the axles being provided with respective differentials, the assembly comprising a gear wheel (10) in driving engagement with a gearbox output wheel (13), cylindrical spur gears (16, 17) rotatably mounted on said gear wheel, said spur gears meshing with each other and each meshing with one of two coaxial spur wheels (19, 20), one of said spur wheels being connected with the front or rear differential and the second spur wheel being connected with the other differential; said spur wheels (19, 20) being positioned around the differential (23) of the front axle, the spur wheel (20) connected with the second differential at least partially enclosing the spur wheel (19) connected with the first differential.

2. A different assembly for the distribution of drive according to claim 1, wherein the spur wheel (20) connected with the second differential carries a gear wheel (31) which meshes with a gear wheel (26) fixed to a bevel gear (27) meshing with another bevel gear (28) connected with the second differential.

**Patentansprüche**

1. Differentialbaugruppe zur Verteilung des Drehmomentes zwischen der Vorder- und Hinterachsen eines Kraftfahrzeuges in welchem jede Achse mit zugehörigem Differential versehen ist, wobei die Baugruppe ein in Steuerungspassung mit dem Getriebehauptzahnrad (13) stehendes Zahnrad (10), auf dem genannten Zahnrad drehbar gelagerte geradverzahnte Stirnräder (16, 17), enthält, wobei die genannten Stirnräder ineinander und ein jedes derselben mit einem von zwei koaxialen Stirnrädern (19, 20) greifen, wobei eines der genannten Stirnräder mit dem Vorder- oder Hinterdifferential und das zweite Stirnrad mit dem anderen Differential verbunden sind; wobei die genannten Stirnräder (19, 20) um das Vorderachsendifferential (23) .herum angeordnet sind, wobei das mit dem zweiten Differential in Verbindung stehendes Stirnrad (20) das mit dem ersten Differential in Verbindung stehendes Stirnrad (19) wenigstens teilweise einschliesst.

2. Differentialbaugruppe zur Verteilung des Antriebes nach Anspruch 1, dadurch gekennzeichnet, dass das mit dem zweiten Differential verbundenes Stirnrad (20) ein Zahnrad (31) trägt, das mit einem Zahnrad (26) in Eingriff steht, das an ein Kegelrad (27) befestigt ist, das seinerseits mit einem anderen, mit dem zweiten Differential verbundenes Kegelrad (28), in Eingriff steht.

**Revendications**

1. Ensemble à différentiels pour la distribution du couple entre l'essieu avant et l'essieu arrière d'un véhicule automobile, chacun des essieux étant muni d'un respectif différentiel, ledit ensemble comprenant une roue dentée (10) en accouplement de commande avec une roue dentée (13) de sortie de la boîte de vitesses, des engrenages cylindriques à denture droite montés d'une façon pivotante sur ladite roue dentée, lesdits engrenages cylindriques engrénant l'un avec l'autre et chacun d'eux engrénant avec un de deux engrenages cylindriques coaxials (19, 20), un de ces engrenages cylindriques étant relié au différentiel avant ou au différentiel arrière et le deuxième engrenage cylindrique étant relié à l'autre différentiel; lesdits engrenages cylindriques (19, 20) étant positionnés autour du différentiel (23) de l'essieu avant, l'engrenage cylindrique (20) reliée au deuxième différentiel renfermant au moins partiellement l'engrenage cylindrique (19) relié au premier différentiel.

2. Ensemble à différentiels pour la distribution de la commande, selon la revendication 1, caractérisé en ce que l'engrenage cylindrique (20) relié au deuxième différentiel supports une roue dentée (31) qui engréne avec une roue dentée (26) fixée à une roue dentée conique (27) engrénant avec une autre roue dentée conique (28) reliée au deuxième différentiel.

0 096 904

Fig.1

Fig.2

Fig.4

Fig.3